# EUROPÄISCHE PATENTANMELDUNG

(11) **EP 4 227 437 A1**
(43) Veröffentlichungstag der Anmeldung: **16.08.2023**
(21) Anmeldenummer: 22156171.5
(22) Anmeldetag: 10.02.2022
(51) Int. Cl.: C25B 1/04, C25B 1/55, C25B 15/08, B64B 1/06, B64B 1/58

(54) **PRODUKTIONSEINHEIT ZUR ERZEUGUNG VON WASSERSTOFF**

(71) Anmelder: Keil Solar Balloon Company GmbH, 64846 Gross-Zimmern (DE)
(72) Erfinder: Keil, Peter, 64285 Darmstadt (DE)
(74) Vertreter: Tergau & Walkenhorst Patentanwälte PartGmbB

(57) **Zusammenfassung**

Eine Produktionseinheit (1, 1') zur Erzeugung von Wasserstoff durch elektrolytische Zersetzung von Wasser, mit einer durch eine Photovoltaik-Einheit (8) mit elektrischer Energie versorgten, medienseitig an einen Wasserspeicher (6) und ausgangsseitig an einen Wasserstoffspeicher (10) angeschlossenen Elektrolyseeinheit (4), soll eine besonders zuverlässige und schwankungsunanfällige Nutzung einer regenerativen Energiequelle ermöglichen. Dazu ist die Produktionseinheit (1, 1') erfindungsgemäß für einen Schwebebetrieb ausgelegt und umfasst eine einen mit einem Auftriebsgas befüllbaren Auftriebskörper (14) bildende Ballonhülle (12), die mit einer Trägerstruktur für den Wasserspeicher (6), die Elektrolyseeinheit (4), die Photovoltaik-Einheit (8) und den Wasserstoffspeicher (10) versehen ist.

## Beschreibung

Die Erfindung betrifft eine Produktionseinheit zur Erzeugung von Wasserstoff durch elektrolytische Zersetzung von Wasser, mit einer durch eine Photovoltaik-Einheit mit elektrischer Energie versorgten Elektrolyseeinheit. Sie bezieht sich weiter auf ein System zur Erzeugung von Wasserstoff mit einer Mehrzahl von solchen Produktionseinheiten.

Im Sinne nachhaltiger Energiekonzepte ist die Nutzung von Wasserstoff als Energieträger für eine spätere Nutzung als Brennstoff in mobilen oder stationären Verbrauchern mittlerweile zu einer viel beachteten Option geworden. Insbesondere ist es in derartigen Konzepten erstrebenswert, den Wasserstoff unter Rückgriff auf regenerative oder "grüne" Energiequellen durch elektrolytische Aufspaltung von Wasser in Wasserstoff einerseits und Sauerstoff andererseits herzustellen. Dazu wird das Wasser in einer Elektrolyseeinheit, beispielsweise einem Membranelektrolyseur, durch Anlegen einer elektrischen Spannung, beispielsweise über eine Membran hinweg, und die damit einhergehende lonenwanderung in die genannten Bestandteile zerlegt. Besonders umweltfreundlich und idealerweise CO2-neutral sind derartige Konzepte dann, wenn die zur Elektrolyse erforderliche Spannung, d. h. Versorgung mit elektrischer Energie, durch eine regenerative Energiequelle wie beispielsweise Photovoltaik oder Windenergie erfolgt.

Ein Beispiel für eine solche regenerativ betriebene Elektrolyseeinheit für Wasserstoff ist in der DE 10 2010 011 407 A1 beschrieben.

Derartigen Systemen ist aber gemein, dass sie gerade wegen des Rückgriffs auf regenerative Energiequellen zum Betreiben der Elektrolyseeinheit den üblichen starken Schwankungen bei der Bereitstellung der benötigten Energie, die im Wesentlichen allen regenerativen Energiequellen wie Wind, Wasser und Sonne innewohnen, unterworfen sind. Ungeachtet möglicher Systembelastungen durch die andauernd wechselnde Beanspruchung, einhergehend mit erhöhtem Verschleiß der Anlagen, hat dies eine unerwünschte Limitierung und Beschränkung der mit solchen Systemen erreichbaren Produktionsrate oder Ausbeute an hergestelltem Wasserstoff zur Folge.

Der Erfindung liegt daher die Aufgabe zugrunde, eine Produktionseinheit zur Erzeugung von Wasserstoff durch elektrolytische Zersetzung von Wasser der oben genannten Art anzugeben, die eine besonders zuverlässige und schwankungsunanfällige Nutzung der regenerativen Energiequelle ermöglicht.

Diese Aufgabe wird erfindungsgemäß gelöst mit einer einen mit einem Auftriebsgas befüllbaren Auftriebskörper bildenden Ballonhülle, die mit einer Trägerstruktur für den Wasserspeicher, die Elektrolyseeinheit, die Photovoltaik-Einheit und den Wasserstoffspeicher versehen ist.

Die Erfindung geht dabei von der Überlegung aus, dass ein Zugriff auf regenerative Energie besonders zuverlässig und schwankungsarm möglich ist, indem der jeweilige Energiewandler geeignet an einem Ort mit zuverlässigem Angebot an der jeweils ausgewählten natürlichen Energiequelle positioniert wird. Im Falle der als Energiequelle ausgewählten Sonneneinstrahlung, also bei Verwendung von Photovoltaik als Energiewandler, bedeutet dies, dass der Energiewandler möglichst in großer Höhe, also insbesondere oberhalb der Wolkendecke, und zudem in Regionen mit hoher Intensität eingestrahlter Sonnenstrahlung, positioniert werden sollte. Um dem Rechnung zu tragen, sieht die Erfindung vor, die Produktionseinheit zur Wasserstofferzeugung einschließlich ihrer wesentlichen Komponenten in der Art eines mobilen Packages zu bündeln und dazu an einer gemeinsamen Trägerstruktur anzuordnen, mittels derer das gesamte Package oder Bündel in seiner Gesamtheit mobil bewegt und an eine gewählte Position verbracht werden kann. Um dabei dem vorgesehenen Höhenerfordernis, also einer Positionierung bevorzugt oberhalb der Wolkendecke, Genüge zu tun, sollte das genannte Package oder Bündel zudem für einen Schwebebetrieb geeignet ausgeführt sein. Dazu ist vorgesehen, die Produktionseinheit mit einem mit Wasserstoff und/oder Helium befüllten Auftriebskörper zu verbinden. Dies ermöglicht, die gesamte Produktionseinheit während des Produktionszyklus oberhalb der Wolkendecke schweben zu lassen. Die Produktionseinheit kann somit auch als "Solarballon" bezeichnet werden.

Vorteilhafte Ausgestaltungen der Erfindung sind Gegenstand der Unteransprüche.

Die genannten technischen Komponenten, also die Elektrolyseeinheit, der Wasserspeicher und die Photovoltaik-Einheit, können dabei beispielsweise an einem gemeinsamen Traggerüst angeordnet sein, dass mittels der Ballonhülle und dem in dieser befindlichen Auftriebsgas in die angestrebte Schwebe versetzt werden kann. Das Traggerüst kann dabei mehr oder weniger innerhalb der Ballonhülle angeordnet sein, so dass eine vergleichsweise kompakte Bauweise erreichbar ist. Als Auftriebsgas ist vorteilhafterweise, insbesondere unter Rückgriff auf Erkenntnisse aus dem Luftschiffbau, Helium oder Wasserstoff vorgesehen. Dabei kann zusätzlich zu den innerhalb der Ballonhülle vorgesehenen Kammern für das Auftriebsgas, insbesondere Helium, auch noch eine Anzahl von Tanks oder Kammern für den erzeugten Wasserstoff innerhalb der Ballonhülle vorgesehen sein, so dass der erzeugte Wasserstoff als zusätzliches Auftriebsgas zur Aufrechterhaltung des Schwebebetriebs genutzt werden kann.

Eine besonders kompakte und damit handhabungsfreundliche Bauweise für das genannte Package oder Bündel ist erreichbar, indem der Wasserspeicher und/oder die Elektrolyseeinheit vorteilhafterweise innerhalb der den Auftriebskörper bildenden Ballonhülle angeordnet sind.

Die Photovoltaik-Einheit umfasst in an sich üblicher Bauweise eine Anzahl von Photovoltaik-Zellen, die bevorzugt außenseitig an der Ballonhülle angeordnet sind.

Gemäß einem Aspekt der vorliegenden Erfindung wird die genannte Produktionseinheit, bzw. eine Mehrzahl derartiger Einheiten, in einem System zur Erzeugung von Wasserstoff verwendet, wobei die Produktionseinheiten vorteilhafterweise an einem Ort mit einer hohen durchschnittlichen Sonneneinstrahlung positioniert sind. Dabei ist besonders bevorzugt eine Arbeitshöhe oberhalb der Wolkendecke, vorzugsweise von bis zu 8000 m, vorgesehen. Ganz besonders bevorzugt ist zudem die Einrichtung des Produktionsbetriebs der beschriebenen schwebenden Produktionseinheiten jeweils im Bereich der terrestrischen Polarregionen, also insbesondere jenseits der jeweiligen Polarkreise vorgesehen, da in diesen Regionen in der jeweils gewählten Jahreszeit eine kontinuierliche Verfügbarkeit von Sonnenlicht gewährleistet ist. Besonders bevorzugt ist dabei für die Positionierung berücksichtigt, dass die genannte Produktionseinheit in einer Arbeitshöhe von bis 8000m mit einer maximalen Abweichung vom Nordpol von 1,8° am 28. März eines Kalenderjahres bis zu einer Abweichung vom Nordpol von 23,5° am 21. Juni bis zu einer Abweichung vom Nordpol von Maximal 1,8° am 14. September am Polartag vollzeitiger Sonneneinstrahlung ausgesetzt sind. Analog gilt dies bei einer Abweichung vom Südpol von 1,8° am 28. September bis zu einer Abweichung vom Südpol von 23,5° am 21. Dezember bis zu einer Abweichung vom Südpol von 1,8° am 14. März für die Stationierung in der Nähe des Südpols während des (bezogen auf die nördliche Hemisphäre) Winterhalbjahres. Ein solches System umfasst dann vorteilhafterweise noch eine Anzahl weiterer Komponenten, wie beispielsweise Transporteinheiten, vorzugsweise als Luftschiff ausgestaltet, die die Produktionseinheiten logistisch mit einer zentralen Sammelstelle für erzeugten Wasserstoff und/oder einem zentralen Wasserspeicher verbinden.

Im Hinblick auf die angestrebte Stationierung in einer Arbeitshöhe von bis zu 8000m im Bereich der terrestrischen Polarregionen ist die Produktionseinheit, insbesondere im Hinblick auf die Auslegung der Ballonhülle und der weiteren, für die Einstellung des Schwebebetriebs erheblichen Komponenten, vorteilhafterweise geeignet ausgelegt. Dabei ist vorteilhafterweise insbesondere berücksichtigt, dass in der angestrebten Arbeitshöhe mit einer Luftdichte der Umgebungsluft von 0,542 kg/m³ zu rechnen ist. Bei kugelförmiger Ausführung der Ballonhülle, einer Nennleistung des Elektrolyseurs (entsprechend der auslegungsgemäßen Leistungsabgabe der Photovoltaik-Anlage) von 1 MW, einem Betriebsgewicht der Photovoltaikanlage von 20t, einem Betriebsgewicht des Elektrolyseurs von etwa 36t und unter Berücksichtigung der erforderlichen Medienvorräte und -bestände ist dabei für die Ballonhülle vorzugsweise ein Auslegungsvolumen von etwa 200.000 m³ vorgesehen. Bei zylinderförmiger Ausführung der Ballonhülle, einer Nennleistung des Elektrolyseurs (entsprechend der auslegungsgemäßen Leistungsabgabe der Photovoltaik-Anlage) von 4 MW, einem Betriebsgewicht der Photovoltaikanlage von 80t, einem Betriebsgewicht des Elektrolyseurs von etwa 144t und unter Berücksichtigung der erforderlichen Medienvorräte und -bestände ist demgegenüber für die Ballonhülle vorzugsweise ein Auslegungsvolumen von etwa 800.000 m³ vorgesehen.

Das System ist somit zur Herstellung von Wasserstoff auf der Basis von durch die genannten Produktionseinheiten gebildeten schwebenden Fabriken ausgelegt und umfasst erfindungsgemäß als bedeutsame Komponenten eine Anzahl von Solarballons der oben beschriebenen Art, jeweils umfassend einen Auftriebskörper, eine Photovoltaikeinheit, einen Elektrolyseur, Technik- und Tankmodule, ein Dockingsystem, eine Antriebseinheit sowie die zugehörigen Versorgungsstrukturen: eine Wasserversorgungseinheit (WaterSupplyUnit), eine Anzahl von Wasserstoff-Tankern zum Abtransport des produzierten Wasserstoffs sowie eine Anzahl von Wasserstoff-Terminals, an die der erzeugte Wasserstoff zum Zweck der Einspeisung ins Wasserstoffnetz geliefert werden kann.

Die Ausgestaltung der Wasserversorgungseinheit ("Water Supply Unit") sowie deren konzeptionelle Anbindung an das beschriebene Produktionssystem werden dabei als eigenständig erfinderisch angesehen. Der Ausgestaltung liegt das Problem zugrunde, dass für die vorgesehene Erzeugung von Wasserstoff möglichst durchgängig ein ausreichend bemessener Wasservorrat als Ausgangsstoff für die vorgesehene Elektrolyse bereitgestellt werden sollte. Im Hinblick auf die vorgesehenen vergleichsweise langen Produktionszyklen von mehreren Monaten, in denen das System vorteilhafterweise autark arbeiten sollte, würde die Bereitstellung eines hierfür insgesamt ausreichenden Wasservorrats jedoch wahrscheinlich eine zu hohe Gewichtslast bedeuten, so dass der vorgesehene Schwebebetrieb nicht ohne Weiteres sichergestellt werden könnte. Um dem Rechnung zu tragen, ist die Wasserversorgungseinheit in als eigenständig erfinderisch angesehener Ausgestaltung für einen Pendelbetrieb ausgeführt, in dem in wiederkehrenden Zyklen jeweils Teilmengen des Wasservorrats an die beschriebene Produktionseinheit geliefert werden.

Dabei wird in erfinderischer Weise der Umstand genutzt, dass der Produktionsbetrieb der beschriebenen schwebenden Produktionseinheiten jeweils im Bereich der terrestrischen Polarregionen, also in Gebieten mit permanenter Eisdecke, vorgesehen ist. Die Wasserversorgungseinheiten sind im Hinblick darauf dafür ausgelegt, durch Schmelzen von Eis Wasser zu gewinnen und dieses anschließend zu den Produktionseinheiten zu befördern. Hierzu ist die jeweilige Wasserversorgungseinheit für eine Art Pendelbetrieb zwischen der terrestrischen Oberfläche (zur Wassergewinnung durch Schmelzen von Eis) und der jeweiligen Produktionseinheit in der für diese vorgesehenen Arbeitshöhe von beispielsweise etwa 8000m über Meeresspiegel ausgelegt.

Die mit der Erfindung erzielten Vorteile bestehen insbesondere darin, dass durch die Solarballons und vorzugsweise deren Verwendung in einem Kombinationssystem aus mehreren Teilstrukturen eine besonders effiziente Produktion und Bereitstellung grünen Wasserstoffs ermöglicht ist. Durch die Solarballons ist die Produktion von Wasserstoff mittels Elektrolyse in schwebenden Fabriken möglich, die einerseits in geeigneter Höhe oberhalb der Wolkendecke positioniert und mit ihren Photovoltaikflächen geeignet der Sonneneinstrahlung zugewandt ausgerichtet werden können, so dass dauerhaft eine intensive Sonneneinstrahlung auf die Photovoltaikflächen und damit eine enorme Produktionseffizienz bei der Erzeugung des Wasserstoffs im Elektrolyseur erreicht werden kann. Andererseits handelt es sich bei den Solarballons bauartbedingt aber auch um mobile Einheiten, die bedarfsgerecht ihren Standort wechseln können. Dabei ist insbesondere hinsichtlich der geografischen Positionierung beispielsweise halbjährlich ein Wechsel zwischen den Polen möglich, wobei im (bezogen auf die nördliche Hemisphäre) Sommerhalbjahr eine Positionierung am Nordpol und im Winterhalbjahr eine Positionierung am Südpol gewählt werden kann. Damit können die Solarballons durchgängig im Bereich des so genannten Polartags (mit seiner Mitternachtssonne) positioniert werden, in dem eine durchgängige Sonneneinstrahlung herrscht. Damit können die Photovoltaikmodule durchgehend betrieben werden, so dass eine ununterbrochene Produktion gewährleistet ist.

Ausführungsbeispiele der Erfindung werden anhand einer Zeichnung näher erläutert. Darin zeigen:
- Fig. 1: eine schwebende Produktionseinheit zur Erzeugung von Wasserstoff ("Solarballon") im Teilschnitt,
- Fig. 2: eine alternative Ausführungsform der schwebenden Produktionseinheit gem. Fig. 1,
- Fig. 3: eine weitere alternative Ausführungsform der schwebenden Produktionseinheit gem. Fig. 1 im Teilschnitt,
- Fig. 4: die schwebende Produktionseinheit gem. Fig. 3 in Draufsicht,
- Fig. 5: skizzenhaft eine Anzahl verschiedener Ausrichtungen der Produktionseinheit gem. Fig. 1,
- Fig. 6: ein Produktionssystem mit einer Mehrzahl von Produktionseinheiten der vorstehend beschriebenen Art,
- Fig. 7: eine Wasserversorgungseinheit des Systems nach Fig. 6 im Teilschnitt,
- Fig. 8: einen Ausfahrstempel der Wasserversorgungseinheit nach Fig. 7,
- Fig. 9: eine Skizze für den Verfahrensablauf beim Betrieb der Wasserversorgungseinheit gem. Fig. 7,
- Fig. 10: einen Wasserstoff-Tanker des Systems gem. Fig. 6 in seitlicher Ansicht,
- Fig. 11: ein Docking- oder Verbindungssystem für die oben genannten Komponenten im Schnitt, und
- Fig. 12: die Grundplatten der Komponenten des Docking- oder Verbindungssystems nach Fig. 11 in perspektivischer Ansicht.

Gleiche Teile sind in allen Figuren mit denselben Bezugszeichen versehen.

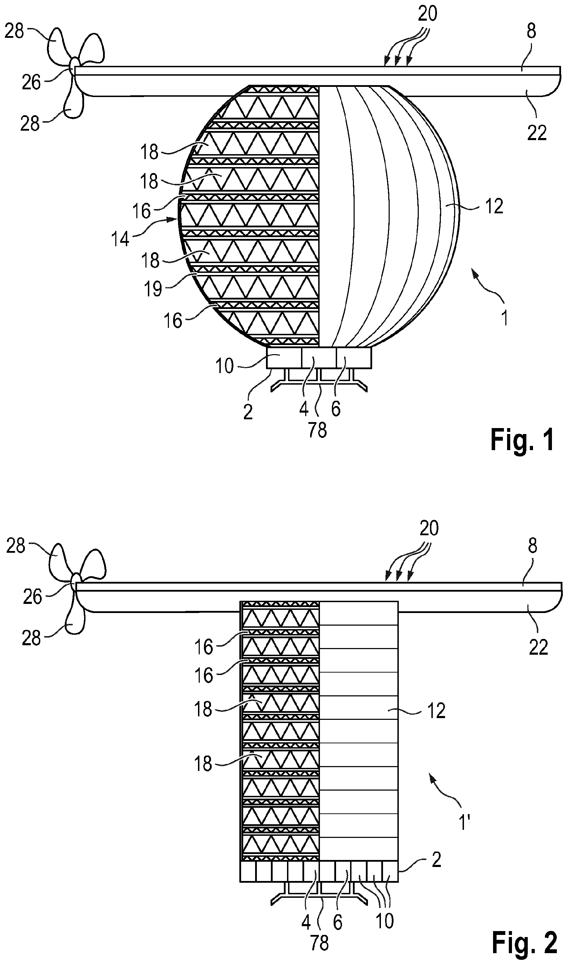

Die Produktionseinheit 1 gemäß Fig. 1 ist für eine zuverlässige und hochwirksame Erzeugung von Wasserstoff durch elektrolytische Zersetzung von Wasser unter Nutzung einer regenerativen Energiequelle, nämlich eingestrahltes Sonnenlicht, ausgeführt. Dazu umfasst die Produktionseinheit 1 eine in einem Technikmodul 2 positionierte Elektrolyseeinheit 4, die zur elektrolytischen Zersetzung von in einem medienseitig an die Elektrolyseeinheit 4 angeschlossenen, ebenfalls im Technikmodul 2 positionierten Wasserspeicher 6 vorgehaltenem Wasser vorgesehen ist. Zur Versorgung der Elektrolyseeinheit 4 mit Strom ist diese an eine Photovoltaik-Einheit 8 angeschlossen, die den benötigten Strom aus dem eingestrahlten Sonnenlicht erzeugt. Weiterhin umfasst die Produktionseinheit 1 einen ebenfalls im Technikmodul 2 positionierten Wasserstoffspeicher 10 für den erzeugten Wasserstoff.

Um den Zugriff auf das als regenerative Energiequelle vorgesehene Sonnenlicht besonders zuverlässig und schwankungsarm zu ermöglichen, ist die Produktionseinheit 1 für eine Positionierbarkeit in besonders großer Höhe, vorzugsweise oberhalb der Wolkendecke, vorgesehen und ausgelegt. Dazu ist die Produktionseinheit 1 für einen Schwebebetrieb geeignet ausgeführt. Das für die Wasserstoffproduktion vorgesehene Ensemble, umfassend als hierfür wesentliche Komponenten die Elektrolyseeinheit 4, den Wasserspeicher 6, die Photovoltaik-Einheit 8 und den Wasserstoffspeicher 10, ist hierzu an einer eine Tragstruktur bildenden Ballonhülle 12 angeordnet, d. h. an der Ballonhülle 12 sind geeignete Plattformen oder Traggerüste für die Elektrolyseeinheit 4, den Wasserspeicher 6, die Photovoltaik-Einheit 8 und den Wasserstoffspeicher 10 angeordnet. Die Ballonhülle 12 bildet dabei einen mit einem geeigneten Auftriebsgas, beispielsweise Helium, befüllten Auftriebskörper 14. Durch diese grundsätzliche Bauweise, die in der Art einer Bündelung oder eines Packaging für die wesentlichen Komponenten ausgeführt ist, ist es ermöglicht, die gesamte Produktionseinheit 1 während des Produktionszyklus oberhalb der Wolkendecke schweben zu lassen. Die Produktionseinheit 1 ist somit in der Art eines "Solarballons" ausgestaltet.

Als Auftriebsgas ist dabei vorzugsweise Helium vorgesehen; der in der Elektrolyseeinheit 4 erzeugte Wasserstoff kann aber ggf. ebenfalls als Auftriebsmittel genutzt werden.

Der durch die Produktionseinheit 1 gebildete Solarballon erfüllt dementsprechend die Funktion der Produktion von grünem Wasserstoff mittels Elektrolyse, gespeist durch Strom aus Photovoltaik, und entspricht im Wesentlichen einem Auftriebskörper, ausgerüstet mit Photovoltaik, Elektrolyseur, Antriebsmotoren und Tanks für Wasser (H₂O), Wasserstoff (H₂) und Sauerstoff (O₂).

Der durch die Ballonhülle 12 gebildete Auftriebskörper 14 dient neben seiner eigentlichen Funktion, nämlich der Bereitstellung des benötigten Auftriebs für den Schwebebetrieb, als strukturelle Basis, auf bzw. in der die weiteren Komponenten befestigt sind. Die als Außenhülle dienende Ballonhülle 12 ist dabei an einer Leichtbau-Tragestruktur 16 mit modularen Auftriebsgasbehältern 18 angeordnet. Die Leichtbau-Tragestruktur 16 dient dabei zudem als formgebendes Element, über das die Außenhaut oder Ballonhülle 12 gespannt wird. Im Ausführungsbeispiel gem. Fig. 1 ist dabei für den Auftriebskörper 14 in besonders bevorzugter Ausführungsform eine Kugelform vorgesehen, die durch entsprechend dimensionierte Scheiben- oder Ringkörper 19 der Leichtbau-Tragestruktur 16 vorgegeben wird. Es sind aber auch andere Formgebungen für die Außenhülle der Produktionseinheit 1 denkbar; beispielsweise zeigt Fig. 2 im Teilschnitt eine alternativ ausgestaltete Produktionseinheit 1' mit im Wesentlichen zylindrischer Formgebung des Auftriebskörpers. In beiden Varianten sind im Inneren der Außen- oder Ballonhülle 12 die modularen Auftriebsgasbehälter 18 angeordnet, deren Auftriebsgas den Solarballon in der gewünschten Höhe hält.

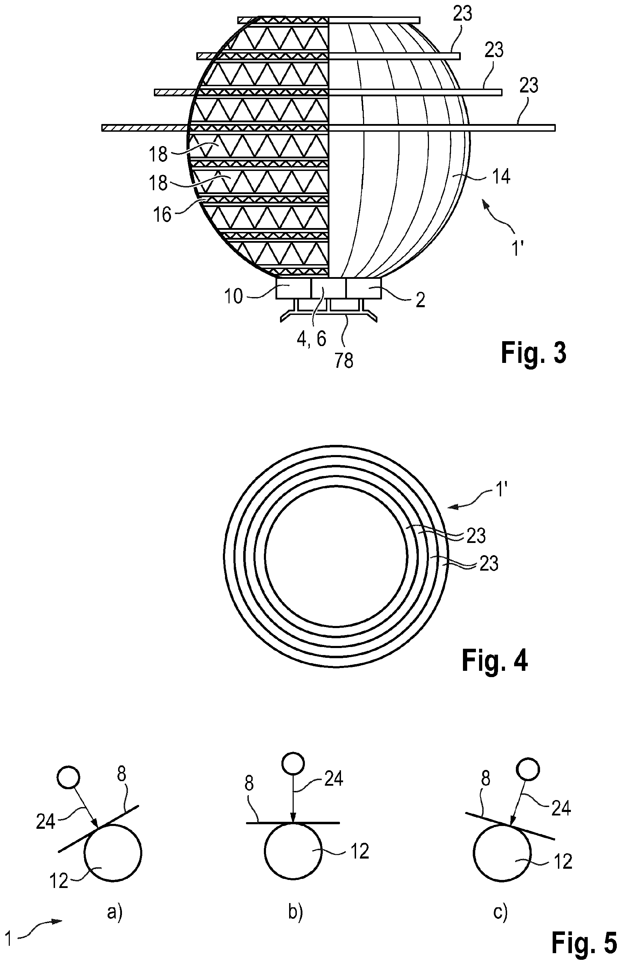

Die zur Stromproduktion vorgesehene Photovoltaik-Einheit 8 ist im Ausführungsbeispiel aus einer Vielzahl leichter Photovoltaik-Elemente 20, Photovoltaik-Komponenten oder Solarmodulen aus an sich herkömmlicher Produktion zusammengestellt, die auf einer gemeinsamen, im Ausführungsbeispiel spinnennetzförmig ausgestalteten Tragestruktur 22 aufgebracht sind. Die Tragestruktur 22 ist dabei in den Ausführungsbeispielen gem. Fig. 1, 2 in der Art einer ausgedehnten Scheibe ausgeführt. Alternativ könnte sie aber auch, angepasst an die kugelförmige Ausgestaltung des Auftriebskörpers 14 im Ausführungsbeispiel gem. Fig. 1, in der Art einer Sequenz gestapelter Ringmodule 23 ausgeführt sein, wie dies im Teilschnitt in Fig. 3 und in Draufsicht in Fig. 4 gezeigt ist. Zur Verdeutlichung sind die Ringmodle 23 in Fig. 4 in unterschiedlichen Grauschattierungen gezeigt. Die Ringmodule 23 folgend dabei mit ihrem Innendurchmesser dem an ihrem Positionierungsort jeweils vorliegenden Außendurchmesser der Ballonhülle 12. Des Weiteren sind sie bevorzugt relativ zueinander derart dimensioniert, dass bei senkrechtem Lichteinfall keine gegenseitige Abschattung eintritt, so dass der Wirkungsgrad des Systems insgesamt besonders hoch gehalten werden kann und durch die freie Drehbarkeit des Gesamtsystems um den Schwerpunkt des Solarballons diese immer so ausgerichtet werden können, dass ein perfekter, senkrechter Einstrahlungswinkel des Sonnenlichts auf die Solarmodule erreicht wird.

Bevorzugt gegenüber dieser Bauweise ist aber die in Fig. 1 gezeigte Ausführungsform mit scheibenförmiger Tragstruktur 22, da diese auch aufgrund der freien Drehbarkeit des Gesamtsystems um den Schwerpunkt des Solarballons herum im Betrieb immer so ausgerichtet werden kann, dass ein perfekter, senkrechter Einstrahlungswinkel des Sonnenlichts auf die Solarmodule erreicht wird. Dies ist skizzenhaft in den Varianten a), b), c) gem. Fig. 5 dargestellt, wobei die Linie 24 jeweils die einfallende Sonnenstrahlung symbolisiert.

Das oder die Technikmodul(e) 2 dient zur Unterbringung der technisch notwendigen Komponenten, und dementsprechend können je nach individueller Systemauslegung unterschiedlich viele Technikmodule 2 mit ggf. unterschiedlicher Ausstattung vorgesehen sein. Die Technikmodule 2 sind, wie dies dem Ausführungsbeispiel gem. Fig. 1 entnehmbar ist, unabhängig von ihrer Ausstattung und unter Berücksichtigung der Eigenschaften der Photovoltaik-Einheit 8 derart an der Tragstruktur 16 angebracht, dass der Schwerpunkt des Solarballons 1 in dessen Zentrum oder Mitte liegt, so dass dieser frei um sein Zentrum drehbar ist. Sie dienen somit als Gegengewicht zur Photovoltaik-Einheit 8.

Die Elektrolyseeinheit 4 ist in einem der Technikmodule 2 untergebracht. Sie wird mit Wasser aus den Wasserspeicher 6 bildenden, ebenfalls in Technikmodulen 2 untergebrachten Wassertanks versorgt und produziert, im Hinblick auf die Versorgung mit Strom durch die Photovoltaik-Einheit 8, "grünen" Wasserstoff. Die Wassertanks wiederum werden ihrerseits mittels einer zugeordneten Wasserversorgung befüllt, welche entweder durch im Technikbereich untergebrachten Wassergewinnungsmaschinen (beispielsweise Kondensatoren) oder durch die nachfolgend beschriebene Wasserversorgungseinheit dargestellt wird.

Zum Manövrieren und Positionieren des Auftriebskörpers 14 ist an diesem eine Anzahl von Motoren, im Ausführungsbeispiel Elektromotoren 26 mit Luftschrauben 28, angeordnet. Diese werden betrieben durch Brennstoffzellen, Batterieeinheiten oder Strom aus der Photovoltaik. Alternativ könnte stattdessen auch eine geeignet gewählte Anzahl von mit Wasserstoff betriebenen Verbrennungsmotoren vorgesehen sein. Schließlich ist der Solarballon auch mit einem geeignet ausgelegten Steuerungssystem zur eigenständigen, autonomen Bewegung ausgerüstet.

Die Produkte aus der Wasser-Elektrolyse in der Produktionseinheit 1, 1', Wasserstoff (H₂) und Sauerstoff (O₂), können über ein System zur Hochdruck- und/oder Flüssig-Lagerung in die entsprechenden Tanks verbracht werden. Dabei kann für eine platzsparende Unterbringung beispielsweise eine Komprimierung (z.B. 700 bar) oder eine Verflüssigung vorgesehen sein.

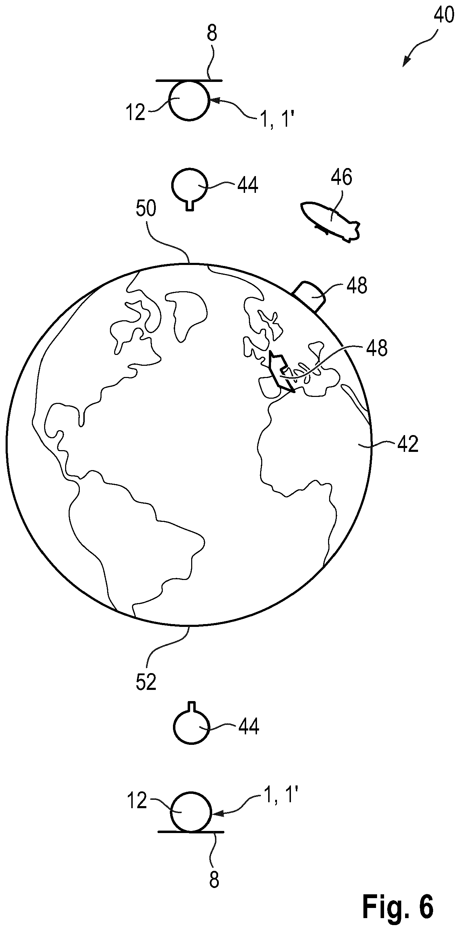

Zur weiteren Erläuterung der Betriebsweise ist in Fig. 6 ein System 40 zur Erzeugung von Wasserstoff mit einer Mehrzahl von Produktionseinheiten 1 oder 1' der vorstehend beschriebenen Art gezeigt. Das System 40 ist für eine global organisierte Betriebsweise ausgelegt und wird daher in Bezug auf die globale Stationierung seiner Komponenten relativ zur Erde 42 gezeigt. Das System 40 umfasst zusätzlich zu einer Mehrzahl von Produktionseinheiten 1, 1' der vorstehend beschriebenen Art, von denen in Fig. 6 der Übersichtlichkeit halber nur jeweils eine im Norden und eine im Süden gezeigt ist, eine Anzahl von zur Versorgung der jeweiligen Solarballons mit Wasser vorgesehenen Wasserversorgungseinheiten 44, eine Anzahl von Wasserstoff-Tankern 46 und eine Anzahl von Wasserstoff-Terminals 48.

Die Wasserstoff-Tanker 46 und die Wasserstoff-Terminals 48 dienen dabei zum Transport und der Weitergabe des in den Produktionseinheiten 1, 1' hergestellten Wasserstoffs an die jeweiligen H₂-Netze. Demgegenüber dienen die Wasserversorgungseinheiten 44 zur Nachlieferung von Wasser an die Produktionseinheiten 1, 1', so dass ausreichend Grundstoff für die Wasserstoffherstellung verfügbar gehalten wird.

Wie in Fig. 6 schematisch dargestellt, erfolgt im (bezogen auf die nördliche Hemisphäre) Sommerhalbjahr eine Stationierung der Produktionseinheiten 1, 1' über dem terrestrischen Nordpol 50, insbesondere oberhalb des nördlichen Polarkreises, so dass eine kontinuierliche Verfügbarkeit von Sonnenlicht gewährleistet ist. Damit können die Produktionseinheiten 1, 1' in diesem Zeitraum kontinuierlich mit regenerativer Energie versorgt werden und Wasserstoff herstellen. Dabei werden sie in der Art eines Pendelbetriebs regelmäßig über die Wasserversorgungseinheiten 44 mit Wasser versorgt, das diese beispielsweise durch Aufschmelzen von Eis in der Polarregion gewinnen. Der hergestellte Wasserstoff wird sodann regelmäßig, ebenfalls in der Art eines Pendelbetriebs, mittels der Wasserstoff-Tanker 46 von den Produktionseinheiten 1, 1' zu den Wasserstoff-Terminals 48 verbracht, von wo aus er in die jeweiligen H₂-Netze eingespeist werden kann. Damit kann beispielsweise im Zeitraum von April bis August eines jeden Kalenderjahres kontinuierlich die Produktion im Bereich des Nordpols 50 durchgeführt werden.

In einer anschließenden Phase, einhergehend mit dem zu Ende gehenden Sommer in der nördlichen Hemisphäre, können beispielsweise im September des jeweiligen Kalenderjahres die Produktionseinheiten 1, 1', ggf. mitsamt der weiteren Komponenten, von ihrem Einsatzort im Bereich des terrestrischen Nordpols 50 zu einem alternativen Standort im Bereich des terrestrischen Südpols 52 verbracht werden, wo sie die Produktion während des (bezogen auf die nördliche Hemisphäre) Winterhalbjahres durchführen. Damit kann beispielsweise im Zeitraum von Oktober bis März eines jeden Kalenderjahres kontinuierlich die Produktion im Bereich des Südpols 52 durchgeführt werden, da in diesem Zeitraum hier eine durchgängige Sonneneinstrahlung verfügbar ist. Mit dem zu Ende gehenden Sommer in der südlichen Hemisphäre, beispielsweise im März, kann dann die Rückverlegung der Produktionseinheiten 1, 1' an ihren nördlichen Einsatzort im Bereich des Nordpols 50 erfolgen, und der jährliche Produktionszyklus kann erneut beginnen. Die "Stichtage" für die jeweiligen Positionswechsel von der nördlichen in die südliche Polarregion und umgekehrt werden dabei bevorzugt und gemäß einem Aspekt der Erfindung nach dem Kriterium ausgewählt, dass möglichst vollständig über den gesamten Tag hinweg Sonneneinstrahlung verfügbar sein sollte, so dass ein 7-Tage/Woche-24-Stunden/Tag- Betrieb ermöglicht ist. Dies ist unter Berücksichtigung der terrestrischen Gegebenheiten erreichbar, indem die Produktionseinheiten 1, 1' in einer Arbeitshöhe oberhalb der Wolkendecke, insbesondere von bis 8000m, während des Zeitraums vom 28. März bis zum 14. September jedes Kalenderjahres im Bereich des Nordpols stationiert werden, und zwar mit einer maximalen Abweichung vom Nordpol von 1,8° am 28. März eines Kalenderjahres bis zu einer maximalen Abweichung vom Nordpol von 23,5° am 21. Juni bis zu einer Abweichung vom Nordpol von maximal 1,8° am 14. September, so dass sie am Polartag vollzeitiger Sonneneinstrahlung ausgesetzt sind. Analog gilt dies bei einer Abweichung vom Südpol von 1,8° am 28. September bis zu einer Abweichung vom Südpol von 23,5° am 21. Dezember bis zu einer Abweichung vom Südpol von 1,8° am 14. März für die Stationierung in der Nähe des Südpols während des (bezogen auf die nördliche Hemisphäre) Winterhalbjahres.

Zusammengefasst produzieren die Solarballons 1, 1' somit etwa von April bis August, bevorzugt vom 28. März bis zum 14. September, über dem Nordpol durchgängig Wasserstoff, wobei die Wasserversorgungseinheiten 44 die Solarballons 1, 1' kontinuierlich mit Wasser versorgen. Die Wasserstoff-Tanker 46 fliegen den Wasserstoff kontinuierlich von den Solarballons 1, 1' zu den Wasserstoff-Terminals 48. In einer Variation ohne Wasserstoff-Tanker 46 fliegen die Solarballons 1, 1' selbst halbjährlich den Wasserstoff zu den Terminals. Im September fliegen die Solarballons mit den Wasserversorgungseinheiten 44 vom Nordpol 50 zum Südpol 52. Am Südpol 52 produzieren die Solarballons 1, 1' etwa von Oktober bis Februar, bevorzugt vom 28. September bis zum 14. März, durchgängig Wasserstoff. Im März fliegen die Solarballons 1, 1' mit den Wasserversorgungseinheiten 44 vom Südpol 52 zurück zum Nordpol 50.

Die Produktionseinheit 1, 1' ist dabei zum Betrieb in einer Arbeitshöhe oberhalb der Wolkendecke ausgelegt, so dass ein möglichst kontinuierlicher Produktionsbetrieb aufrechterhalten werden kann. Dazu ist im Ausführungsbeispiel die Stationierung der Produktionseinheit 1, 1' in einer Arbeitshöhe von bis zu etwa 8000m vorgesehen. Dementsprechend sind die Komponenten, insbesondere die Ballonhülle 12 und deren Tragkraft, geeignet dimensioniert und ausgelegt. Dabei ist unter anderem berücksichtigt, dass in der angestrebten Arbeitshöhe mit einer Luftdichte der Umgebungsluft von 0,542 kg/m³ zu rechnen ist. Bei kugelförmiger Ausführung der Ballonhülle, einer Nennleistung des Elektrolyseurs (entsprechend der auslegungsgemäßen Leistungsabgabe der Photovoltaik-Anlage) von 1 MW, einem Betriebsgewicht der Photovoltaikanlage von 20t, einem Betriebsgewicht des Elektrolyseurs von etwa 36t und unter Berücksichtigung der erforderlichen Medienvorräte und -bestände ist dabei für die Ballonhülle vorzugsweise ein Auslegungsvolumen von etwa 200.000m³ in einer Flughöhe von etwa 8 km vorgesehen. Genauer sind vorteilhafterweise für beispielhafte Szenarien einer Nennleistung der Elektrolyseeinheit von 1 MW bzw. 4 MW bevorzugt in etwa folgende Auslegungsparameter vorgesehen:

### 1. Variante: Auslegung 1MW

| | |
|---|---|
| Leistung (MW) | 1 |
| Form Ballonhülle 12 | Kugel |
| Flughöhe (km) | 8 |
| Luftdichte bei Flughöhe 8km (kg/m³) | 0,542 |
| Auftriebsgas | Helium/Wasserstoff |

Photovoltaikeinheit 8:

| | |
|---|---|
| Leistung (MW) | 1 |
| Gewicht bei Leistung 1 MW (t) | 20 |
| Fläche bei Leistung 1 MW (m²) | 7000 |

Elektrolvseur 4:

| | |
|---|---|
| Leistungsinput (MW) | 1 |
| Output H₂ (kg/d) | 450 |
| Druck H₂ (bar) | 30 |
| Gewicht Elektrolyseur (t) | 36 |
| Größe | ca. 13,2 x 4,0 x 5,7 m |

Wasserstoffspeicher 10:

| | |
|---|---|
| Variante Drucktank 700bar: | |
| Spezifisches Gewicht H₂ bei 700bar (kg/m³) | 40 |
| Tagesvolumen bei Drucktankspeicherung (m³) | 11,25 |
| Stundenvolumen bei Drucktankspeicherung (m³) | 0,47 |

Variante Flüssigspeicherung:

| | |
|---|---|
| Spezifisches Gewicht H₂ bei Verflüssigung (kg/m³) | 71 |
| Tagesvolumen bei Verflüssigung (m³) | 6,34 |
| Stundenvolumen bei Verflüssigung (m³) | 0,26 |

### Kenn- und Auslegungsdaten Solarballon 1

Nutzunaskonzept: Terminals in Australien (September-März) und Deutschland (März-September)

| | |
|---|---|
| Fluggeschwindigkeit Solarballon 1 (km/h) | 60,00 |
| Flugstrecke Nord-Südpol (km) | 20015,00 |
| Flugdauer (h) | 333,58 |
| Aktive Produktionszeit pro Halbjahr (h) (ermittelt aus 365*24h/2 - Flugdauer) | 4046,42 |
| Halbjahresertrag H₂ pro Solarballon (t) | 75,87 |
| Jahresertrag H₂ pro Solarballon (t): (ermittelt aus Produktionszeit * Produktionskapazität) | 151,74 |
| Fluggeschwindigkeit H₂-Tanker 46 (km/h) | 100,00 |
| Flugstrecke Nordpol-Hamburg (km) | 4052,00 |
| Flugdauer (h) | 40,52 |
| Flugstrecke Südpol-Melbourne (km) | 5800,00 |
| Flugdauer (h) | 58,00 |

Bei einer Deckung von einem H₂-Tanker pro Solarballon (1) ergibt sich das Tankvolumen durch die längste Flugdauer * 2 + Abnahmezeit am Terminal + Beladezeit am Solarballon (1) (=Produktionszeit) multipliziert mit dem Stundenvolumen der H₂-Produktion

| | |
|---|---|
| Geschätzte Abnahmezeit am Terminal (h) | 12,00 |
| Geschätzte Beladezeit am Solarballon (h) | 12,00 |

Produktionszeit (h):

| | |
|---|---|
| längste Flugdauer H₂-Tanker*2 + Abnahmezeit + Beladezeit | 140,00 |
| Tankvolumen bei Produktionszeit bei 700bar (m³) | 65,63 |
| Tankvolumen bei Produktionszeit Verflüssigung (m³) | 36,97 |
| Gewicht H₂-Tankinhalt, sowohl Solarballon als auch H₂-Tanker (t) | 2,63 |
| Gewicht Elektrolyseur (t) | 36,00 |
| Gewicht Photovoltaik (t) | 20,00 |
| Auftriebskörper Schätzung (t) | 50,00 |
| Gewicht Solarballon leerer Tank (t) | 106,00 |
| Gewicht Solarballon voller Tank (t) | 108,63 |
| Volumen Auftriebskörper bei 8km Flughöhe | |
| leerer Tank (m³) | 195.571,96 |
| Volumen Auftriebskörper bei 8km Flughöhe | |
| voller Tank (m³) | 200.415,13 |
| Durchmesser bei Kugel bei 8km Flughöhe | |
| bei vollem Tank (m) | 72,61 |

### Kenn- und Auslegungsdaten Wasserstoff-Tanker 46

| | |
|---|---|
| Fluggeschwindigkeit H₂-Tanker (km/h) | 100,00 |
| Flugstrecke Nordpol-Hamburg (km) | 4052,00 |
| Flugdauer (h) | 40,52 |
| Flugstrecke Südpol-Melbourne (km) | 5800,00 |
| Flugdauer (h) Flugdauer für eine Beladung/Entladung (h): | 58,00 |
| längste Flugdauer*2 + Abnahmezeit+Beladezeit Tankrechnungen siehe oben | 140,00 |
| Tankvolumen bei Produktionszeit bei 700bar (m³) | 65,63 |
| Tankvolumen bei Produktionszeit Verflüssigung (m³) | 36,97 |
| Gewicht H₂-Tankinhalt, sowohl Solarballon als auch Wasserstoff-Tanker (t) | 2,63 |
| Gewicht Auftriebskörper Schätzung (t) | 5,00 |
| Gewicht voller H₂-Tanker (t) | 7,63 |
| Volumen Auftriebskörper bei 8km Flughöhe bei vollem Tank (m³) | 14.068,27 |

### Kenn- und Auslegungsdaten Wasserversorgungseinheit 44

Muss 8km von Boden bis zum Solarballon (1) aufsteigen, Wasser gewinnen und liefern. Bei einem Produktionsziel von 450kg H₂/tag werden 4050kg/tag Wasser benötigt

| | |
|---|---|
| Annahme: Aufstieg+Lieferung+Abstieg Dauer (h) | 24,00 |
| Tankvolumen bei 4050kg Wasser (m³) | 4,04 |
| Leergewicht Schätzung Auftriebskörper + Technik (t) | 7,50 |
| Gewicht volle Wasserversorgungseinheit (t) | 11,54 |
| Volumen Auftriebskörper bei 8km Flughöhe bei vollem Tank (m³) | 21.287,55 |

### 2. Variante: Auslegung 4MW

| | |
|---|---|
| Leistung (MW) | 4 |
| Form Ballonhülle 12 | Zylinder |
| Flughöhe (km) | 8 |
| Luftdichte bei Flughöhe 8km (kg/m³) | 0,542 |
| Auftriebsgas | Helium/Wasserstoff |

Photovoltaikeinheit 8:

| | |
|---|---|
| Leistung (MW) | 4 |
| Gewicht bei Leistung 1 MW (t) | 80 |
| Fläche bei Leistung 1 MW (m²) | 28000 |

Elektrolvseur 4:

| | |
|---|---|
| Leistungsinput (MW) | 4 |
| Output H₂ (kg/d) | 1.800 |
| Druck H₂ (bar) | 30 |
| Gewicht Elektrolyseur (t) | 144 |
| Größe | 4x ca. 13,2 x 4,0 x 5,7 m |

Wasserstoffspeicher 10:

| | |
|---|---|
| Variante Drucktank 700bar: | |
| Spezifisches Gewicht H₂ bei 700bar (kg/m³) | 40 |
| Tagesvolumen bei Drucktankspeicherung (m³) | 45 |
| Stundenvolumen bei Drucktankspeicherung (m³) | 1,88 |

Variante Flüssigspeicherung:

| | |
|---|---|
| Spezifisches Gewicht H₂ bei Verflüssigung (kg/m³) | 71 |
| Tagesvolumen bei Verflüssigung (m³) | 25,35 |
| Stundenvolumen bei Verflüssigung (m³) | 1,06 |

### Kenn- und Auslegungsdaten Solarballon 1

Nutzungskonzept: Terminals in Australien (September-März) und Deutschland (März-September)

| | |
|---|---|
| Fluggeschwindigkeit Solarballon (1) (km/h) | 60,00 |
| Flugstrecke Nord-Südpol (km) | 20015,00 |
| Flugdauer (h) | 333,58 |
| Aktive Produktionszeit pro Halbjahr (h) (ermittelt aus 365*24h/2 - Flugdauer) | 4046,42 |
| Halbjahresertrag H₂ pro Solarballon (t) | 303 |
| Jahresertrag H₂ pro Solarballon (t): (ermittelt aus Produktionszeit * Produktionskapazität) | 607 |
| Fluggeschwindigkeit H₂-Tanker (km/h) | 100,00 |
| Flugstrecke Nordpol-Hamburg (km) | 4052,00 |
| Flugdauer (h) | 40,52 |
| Flugstrecke Südpol-Melbourne (km) | 5800,00 |
| Flugdauer (h) | 58,00 |

Bei einer Deckung von einem H₂-Tanker pro Solarballon (1) ergibt sich das Tankvolumen durch die längste Flugdauer * 2 + Abnahmezeit am Terminal + Beladezeit am Solarballon (1) (=Produktionszeit) multipliziert mit dem Stundenvolumen der H2-Produktion

| | |
|---|---|
| 3Geschätzte Abnahmezeit am Terminal (h) | 12,00 |
| Geschätzte Beladezeit am Solarballon (h) | 12,00 |

Produktionszeit (h):

| | |
|---|---|
| längste Flugdauer H₂-Tanker*2 + Abnahmezeit + Beladezeit | 140,00 |

| | |
|---|---|
| Tankvolumen bei Produktionszeit bei 700bar (m³) | 262,5 |
| Tankvolumen bei Produktionszeit Verflüssigung (m³) | 148 |
| Gewicht H₂-Tankinhalt, sowohl Solarballon als auch H₂-Tanker (t) | 10,5 |

| | |
|---|---|
| Gewicht Elektrolyseur (t) | 144,00 |
| Gewicht Photovoltaik (t) | 80,00 |
| Auftriebskörper Schätzung (t) | 200,00 |
| Gewicht Solarballon leerer Tank (t) | 424,00 |
| Gewicht Solarballon voller Tank (t) | 434,50 |
| Volumen Auftriebskörper bei 8km Flughöhe leerer Tank (m³) | 782.287,82 |
| Volumen Auftriebskörper bei 8km Flughöhe voller Tank (m³) | 801.660,52 |
| Durchmesser bei Kugel bei 8km Flughöhe bei vollem Tank (m) | 115,26 |

### Kenn- und Auslegungsdaten Wasserstoff-Tanker 46

| | |
|---|---|
| Fluggeschwindigkeit H₂-Tanker (km/h) | 100,00 |
| Flugstrecke Nordpol-Hamburg (km) | 4052,00 |
| Flugdauer (h) | 40,52 |
| Flugstrecke Südpol-Melbourne (km) | 5800,00 |
| Flugdauer (h) | 58,00 |
| Flugdauer für eine Beladung/Entladung (h): längste Flugdauer*2 + Abnahmezeit+Beladezeit | 140,00 |
| Tankrechnungen siehe oben | |
| Tankvolumen bei Produktionszeit bei 700bar (m³) | 262,50 |
| Tankvolumen bei Produktionszeit Verflüssigung (m³) | 147,89 |
| Gewicht H₂-Tankinhalt, sowohl Solarballon als auch Wasserstoff-Tanker (t) | 10,5 |
| Gewicht Auftriebskörper Schätzung (t) | 10,00 |
| Gewicht voller H₂-Tanker (t) | 20,50 |
| Volumen Auftriebskörper bei 8km Flughöhe bei vollem Tank (m³) | 37.822,88 |

### Kenn- und Auslegungsdaten Wasserversorgungseinheit 44

| | |
|---|---|
| Muss 8km von Boden bis zum Solarballon (1) aufsteigen, Wasser gewinnen und liefern. Bei einem Produktionsziel von 450kg H₂/tag werden | 4050kg/tag |
| Wasser benötigt | |
| Annahme: Aufstieg+Lieferung+Abstieg Dauer (h) | 24,00 |
| Tankvolumen bei 4050kg Wasser (m³) | 16,15 |
| Leergewicht Schätzung Auftriebskörper + Technik (t) | 15 |
| Gewicht volle Wasserversorgungseinheit (t) | 31,20 |
| Volumen Auftriebskörper bei 8km Flughöhe bei vollem Tank (m³) | 57.564,58 |

Selbstverständlich ist auch eine Vielzahl anderer Parameterkombination für die Auslegung des Systems 40 denkbar, wobei die oben angegebenen Werte als Orientierungswerte dienen können. In der bevorzugt vorgesehenen Bandbreite für die Auslegung der Leistung von 1 MW bis 4 MW können sich ein Gewicht von beispielsweise 106 bis 424 Tonnen und ein Auftriebsvolumen des Auftriebskörpers 14 von beispielsweise 200.000m³ bis 800.000m³ als geeignet erweisen. Als Auftriebsgas ist vorzugsweise Wasserstoff oder Helium vorgesehen, die bevorzugte Flughöhe beträgt bis etwa 8000m, und die Form des Auftriebskörpers kann kugel- bis zylinderartig sein.

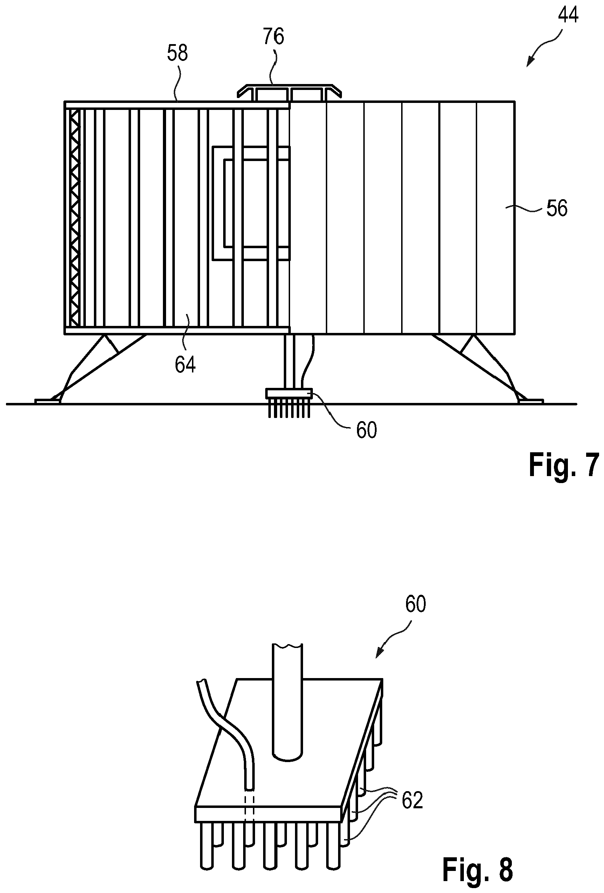

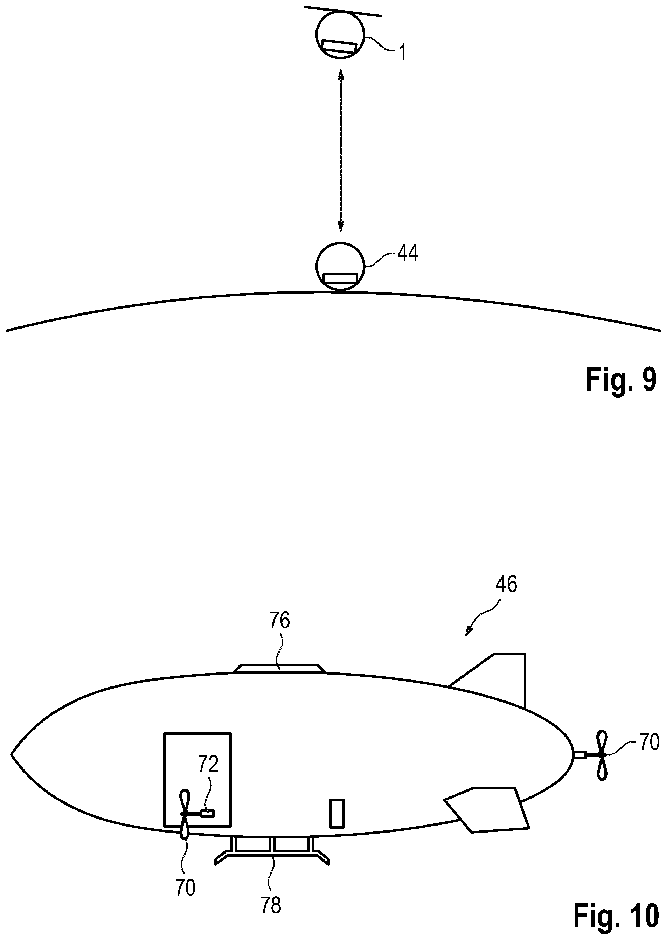

Ein Ausführungsbeispiel der Wasserversorgungseinheit 44 ist in Fig. 7 im Teilschnitt gezeigt. Die Wasserversorgungseinheit 44 ("Water supply unit") weist einen ebenfalls als Auftriebskörper ausgestalteten Grundkörper 56 auf, der mit Helium und/oder Wasserstoff als Auftriebsgas befüllt und zur Energieversorgung mit einer Photovoltaikfläche 58 versehen ist. Weiterhin umfasst sie im gezeigten Ausführungsbeispiel zur Wassergewinnung einen beheizbaren Ausfahrstempel 60, der in Fig. 8 vergrößert gezeigt ist. Am Ausfahrstempel 60 sind Edelstahlheizröhren 62 angeordnet. Diese schmelzen aus Eis am Boden Wasser, das mittels einer Pumpe zu den im Innenraum des Grundkörpers 56 der Wasserversorgungseinheit 44 angeordneten Wassertanks 64 gefördert wird. Nach der Befüllung der Wassertanks 64 steigt die Wasserversorgungseinheit 44 zu den Solarballons 1, 1' auf und gibt das Wasser an diese ab, wie dies skizzenhaft für den Verfahrensablauf in Fig. 9 gezeigt ist. Dabei bildet die Wasserversorgungseinheit 44 zusammen mit dem Solarballon 1, 1' ein autarkes Produktionssystem. Als alternative Versorgung des Solarballons 1, 1' wäre die direkte Versorgung aus dem Wassergehalt der Luft denkbar, beispielsweise durch Kondensierung. Der Antrieb erfolgt im Ausführungsbeispiel durch Strom aus der Photovoltaikfläche 58 und/oder Strom aus einer Wasserstoff-Sauerstoff-Brennstoffzelle oder einer Batterieeinheit, die jeweils geeignet einen Elektromotor antreiben können. Ebenso wie die Solarballons 1, 1' ist die Wasserversorgungseinheit 44 zusätzlich zu den Tanks (64) für Wasser (H₂O) auch mit nicht ausdrücklich dargestellten Tanks für Wasserstoff (H₂) und Sauerstoff (O₂) ausgerüstet.

Ein Ausführungsbeispiel für den Wasserstoff-Tanker 46 ist in Fig. 10 in seitlicher Ansicht gezeigt. Vom Aufbau her ist ein solcher Tanker im Ausführungsbeispiel im Wesentlichen nach Art eines konventionellen Luftschiffs ausgelegt. Der Wasserstoff-Tanker 46 sollte in der Lage sein, auch große Strecken zurückzulegen, weswegen er in der in Fig. 10 gezeigten bevorzugten Ausführungsform in einer aerodynamischen Form hergestellt ist. Als Antrieb sind Luftschrauben 70 vorgesehen, deren Energieversorgung beispielsweise durch Elektromotoren 72 mit einer Wasserstoff-Sauerstoff-Brennstoffzelle, einer Batterieeinheit, einer Photovoltaikanlage oder einer Kombination dieser Möglichkeiten erfolgen kann. Alternativ könnte auch Anzahl von Wasserstoffmotoren vorgesehen sein. Der Wasserstoff-Tanker 46 ist ferner mit einem nicht näher dargestellten Steuerungssystem zur eigenständigen, autonomen Bewegung versehen und - als eigenständiges Fluggerät - ebenfalls mit nicht näher dargestellten Tanks für Wasser (H₂O), für Wasserstoff (H₂) und für Sauerstoff (O₂) ausgerüstet.

Von besonderer Bedeutung für eine zuverlässige Betriebsweise des Systems 40 ist ein zuverlässiger, problemloser Medientransfer zwischen den einzelnen Komponenten, da der in der Produktionseinheiten 1, 1' erzeugte Wasserstoff zuverlässig und möglichst verlustarm an die Wasserstoff-Tanker 46 und von diesen nach dem Transport an die jeweiligen Wasserstoff-Terminals 48 übergeben werden muss. Andererseits muss auch das von den Wasserversorgungseinheiten 44 herbeigeführte Wasser an die Produktionseinheiten 1, 1' übergeben werden.

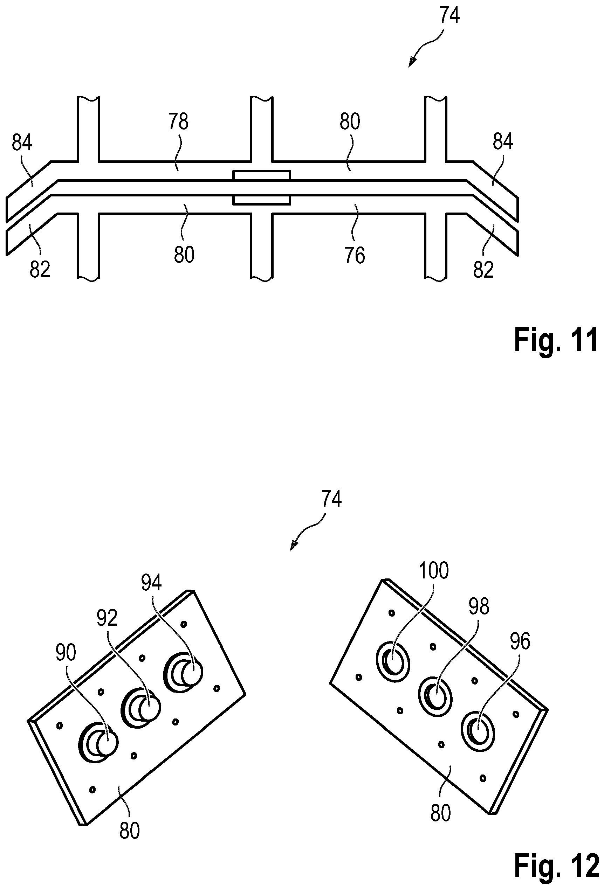

Um diese Übergabevorgänge möglichst zuverlässig und verlustarm auszugestalten, sind die genannten Komponenten an den jeweils relevanten Schnittstellen mit einem als eigenständig erfinderisch angesehenen Docking- oder Verbindungssystem 74 ausgerüstet. Dieses ist dafür ausgerüstet, einerseits eine zuverlässige und stabile lösbare Verbindung zwischen jeweils zwei der genannten Komponenten zu bieten und andererseits den zuverlässigen Medientransfer zwischen den Komponenten zu ermöglichen. Dazu umfasst das Docking- oder Verbindungssystem, wie in Fig. 11 im Schnitt dargestellt, zwei zueinander komplementäre, aufeinander abgestimmte Verbindungselemente 76, 78, von denen das erste Verbindungselement 76 als "männlich" und das zweite Verbindungselement 78 als "weiblich" bezeichnet werden könnte. Beide Verbindungselemente 76, 78 weisen jeweils eine Grundplatte 80 auf, über die in der Art eines Flächenkontakts der mechanische Anschluss an die jeweils andere Grundplatte 80 hergestellt werden kann. Seitlich an der jeweiligen Grundplatte 80 ist ein umlaufender Kragen 82, 84 angeordnet, der im Fall des ersten, männlichen Verbindungselements 76 um einen vorgegebenen Winkel, im Ausführungsbeispiel 45°, nach hinten, also vom anderen Verbindungselement 78 weg, und im Fall des zweiten, weiblichen Verbindungselements 78 um denselben vorgegebenen Winkel nach vorne, also dem anderen Verbindungselement 76 zu, geneigt angebracht ist. Die beiden Kragen 82, 84 bilden somit gemeinsam eine Führungspaarung für das Dockingsystem 74, die sicherstellt, dass bei einer Herstellung des Kontakts zwischen den beiden Grundplatten 80 miteinander diese relativ zueinander korrekt geführt und auslegungsgemäß zueinander zentriert werden. Die Fixierung der beiden Grundplatten 80 aneinander kann sodann mit geeigneten Mitteln, beispielsweise einem Unterdrucksystem oder mittels magnetischer Elemente, hergestellt und aufrechterhalten werden.

In Fig. 12 sind die Grundplatten 80 des männlichen Verbindungselements 76 und des weiblichen Verbindungselements 78 jeweils in perspektivischer Ansicht gezeigt. Daraus wird deutlich, dass die Grundplatten mit einer Anzahl von Medienkupplungen versehen sind, die einen sicheren Transfer der vorliegend wichtigen Medien Wasserstoff, Sauerstoff und Wasser ermöglichen. Dazu weist die dem "männlichen" Verbindungselement 76 zugeordnete Grundplatte 80 einen dem Medium Wasserstoff zugeordneten Verbindungsstecker 90, einen dem Medium Sauerstoff zugeordneten Verbindungsstecker 92 und einen dem Medium Wasser zugeordneten Verbindungsstecker 94 auf. Komplementär zu diesen weist die dem "weiblichen" Verbindungselement 78 zugeordnete Grundplatte 80 eine dem Medium Wasserstoff zugeordnete Verbindungsmuffe 96, eine dem Medium Sauerstoff zugeordnete Verbindungsmuffe 98 und eine dem Medium Wasser zugeordnete Verbindungsmuffe 100 auf. Diese Elemente sind mit geeigneten selbstschließenden Ventilen versehen. Wenn eine Verbindung zwischen den Grundplatten 80 hergestellt wird, werden gleichermaßen die entsprechenden Medienverbindungen mittels dieser Steckverbindungen hergestellt, so dass ein Medienaustausch zwischen den Komponenten möglich wird.

Die Komponenten des Systems 40 sind in als eigenständig erfinderisch angesehener Ausgestaltung mit entsprechenden Verbindungselementen 76, 78 ausgerüstet, wobei sämtliche weiblichen mit sämtlichen männlichen Verbindungselementen kompatibel ausgestaltet sind, so dass die Komponenten des Systems 40 beliebig und zweckentsprechend miteinander verbunden werden können. Im gezeigten Ausführungsbeispiel kann dabei, bedingt durch den bestimmungsgemäßen Gebrauch der Komponenten im Schwebetrieb, zwischen der Ausrichtung "oben" (= von der Erde ab- und der Sonne zugewandt) und "unten" (= der Erde zugewandt) unterschieden werden. Um dabei eine systemweite Kompatibilität der Komponenten miteinander zu ermöglichen, sind alle Komponenten des Systems 40 an ihrem jeweils unteren Bereich mit einem "weiblichen" Verbindungselement 78 und an ihrem oberen Bereich mit einem "männlichen" Verbindungselement 76 ausgerüstet. Selbstverständlich könnte dies auch umgekehrt ausgeführt sein.

### Bezugszeichenliste

- 1: Produktionseinheit
- 2: Technikmodul
- 4: Elektrolyseeinheit
- 6: Wasserspeicher
- 8: Photovoltaik-Einheit
- 10: Wasserstoffspeicher
- 12: Ballonhülle
- 14: Auftriebskörper
- 16: Leichtbau-Tragestruktur
- 18: Auftriebsgasbehälter
- 19: Ringkörper
- 20: Photovoltaik-Element
- 22: Tragestruktur
- 23: Ringmodule
- 24: Linie
- 26: Elektromotor
- 28: Luftschraube
- 40: System
- 42: Erde
- 44: Wasserversorgungseinheit
- 46: Wasserstoff-Tanker
- 48: Wasserstoff-Terminal
- 50: Nordpol
- 52: Südpol
- 56: Grundkörper
- 58: Photovoltaikfläche
- 60: Ausfahrstempel
- 62: Heizrohr
- 64: Wassertank
- 70: Luftschrauben
- 72: Elektromotoren
- 74: Dockingsystem
- 76,78: Verbindungselement
- 80: Grundplatte
- 82,84: Kragen
- 90-94: Verbindungsstecker
- 96-100: Verbindungsmuffe

## Patentansprüche

1. Produktionseinheit (1, 1') zur Erzeugung von Wasserstoff durch elektrolytische Zersetzung von Wasser, mit einer durch eine Photovoltaik-Einheit (8) mit elektrischer Energie versorgten, medienseitig an einen Wasserspeicher (6) und ausgangsseitig an einen Wasserstoffspeicher (10) angeschlossenen Elektrolyseeinheit (4), und mit einer einen mit einem Auftriebsgas befüllbaren Auftriebskörper (14) bildenden Ballonhülle (12), die mit einer Trägerstruktur für den Wasserspeicher (6), die Elektrolyseeinheit (4), die Photovoltaik-Einheit (8) und den Wasserstoffspeicher (10) versehen ist.

2. Produktionseinheit (1, 1') nach Anspruch 1, bei der der Wasserspeicher (6) und/oder die Elektrolyseeinheit (4) und/oder der Wasserstoffspeicher (10) innerhalb der den Auftriebskörper (14) bildenden Ballonhülle (12) angeordnet sind.

3. Produktionseinheit (1, 1') nach Anspruch 1 oder 2, deren Photovoltaik-Einheit (8) eine Anzahl von außenseitig an der Ballonhülle (12) angeordneten Photovoltaik-Elementen (20) umfasst.

4. Produktionseinheit (1, 1') nach einem der Ansprüche 1 bis 3, deren Ballonhülle (12) ein Volumen von 200.000m³ bis 800.000m³ einnimmt.

5. System (40) zur Erzeugung von Wasserstoff mit einer Mehrzahl von Produktionseinheiten (1, 1') nach einem der Ansprüche 1 bis 4, die an einem Ort mit einer hohen durchschnittlichen Sonneneinstrahlung in einer Arbeitshöhe von bis zu etwa 8.000m ü.M. positioniert sind.

6. System (40) nach Anspruch 5, mit einer Anzahl von Transporteinheiten (46), vorzugsweise als Luftschiff ausgestaltet, die die Produktionseinheiten (1, 1') logistisch mit einer zentralen Sammelstelle (48) für erzeugten Wasserstoff verbinden.

7. System (40) nach Anspruch 5 oder 6, mit einer Anzahl von Wasserversorgungseinheiten (44), die jeweils einen als Auftriebskörper ausgestalteten, mit Helium und/oder Wasserstoff als Auftriebsgas befüllten Grundkörper (56) sowie einen mit einer Anzahl von Heizröhren (62) versehenen Ausfahrstempel (60) zum Schmelzen und Aufnehmen von Wasser umfassen.
